# EUROPEAN PATENT APPLICATION

(11) **EP 4 599 814 A1**
(43) Date of publication of application: **13.08.2025**
(21) Application number: 24812358.0
(22) Date of filing: 03.12.2024
(51) Int. Cl.: A61G 7/057, A61G 7/05, A47C 27/08, F16K 17/00

(54) **AIR PRESSURE CONTROL DEVICE OF MATTRESS FOR PREVENTING BEDSORES**

(30) Priority: 19.12.2023 KR 20230185909; 19.12.2023 KR 20230185912
(71) Applicant: Neo Able Co.,Ltd., Wonju-si Gangwon-do (KR)
(72) Inventor: CHO, Ki Han, Seoul 04005 (KR); BAEK, Seung Yeob, Gunpo-si, Gyeonggi-do 15875 (KR)
(74) Representative: Curell Suñol S.L.P.
(86) International application number: PCT/KR2024/019523
(87) International publication number: WO 2025/135604

(57) **Abstract**

The air pressure control mattress device according to one embodiment of the present invention comprises: a mattress unit; a control unit; a pump unit; and a user input unit. The mattress unit comprises a plurality of air cells configured to receive air from the pump unit. The control unit comprises: a processor; a memory storing at least one instruction for air pressure control; at least one pressure sensor configured to measure air pressure within the air cells; and at least one air pressure control unit configured to control air intake and discharge of the air cells based on the instructions executed by the processor. The present invention provides an air pressure control device that considers the characteristics of a user's body and posture, which not only prevents pressure ulcers but also enhances prevention effectiveness by accounting for various factors beyond vertical pressure, including environmental conditions (e.g., temperature and humidity), shear forces, and frictional forces.

## Description

### BACKGROUND

### 1. Technical Field

The present invention relates to an air pressure control device for a bedsore prevention mattress, and more particularly, to the structure and operational methods of an air pressure-controlled mattress, which supports various medical procedures applied to bedridden patients, comprising the prevention and treatment of bedsores.

### 2. Related Art

When prolonged pressure is applied to the human body, oxygen supply to the capillaries decreases, causing the skin to swell. Continuous and repetitive pressure on bony protrusions can disrupt blood circulation, resulting in necrosis of the skin and blockage of blood vessels, which leads to bedsores. Elderly individuals, those with disabilities, and patients who cannot control their own posture are particularly vulnerable due to prolonged immobility. To prevent bedsores, it is necessary to regularly change the patient's posture, reduce pressure on specific body areas, and maintain optimal temperature and humidity conditions.

Traditionally, to prevent bedsores, personnel such as medical staff and caregivers manually identified the areas under pressure on the patient's body and performed activities to relieve pressure on those areas. However, since caregivers must manually change the patient's posture to relieve pressure on the body, it requires significant time and cost. Additionally, caregivers face limitations in consistently assessing the risk of bedsore formation throughout the day, leading to disputes over liability due to negligent management. Furthermore, because the pressure exerted on the same area can vary depending on individual factors such as weight, height, gender, and age, it is essential to manage the risk of bedsores on a case-by-case basis. Nevertheless, it is challenging for caregivers to identify the pressure applied to each area based on the individual's posture and assess the risk of bedsore formation.

Meanwhile, in recent times, air mattresses have been utilized to address these issues and prevent bedsores. When using air mattresses, the assistance of caregivers is relatively less required, and continuous relief of the user's pressure is achievable.

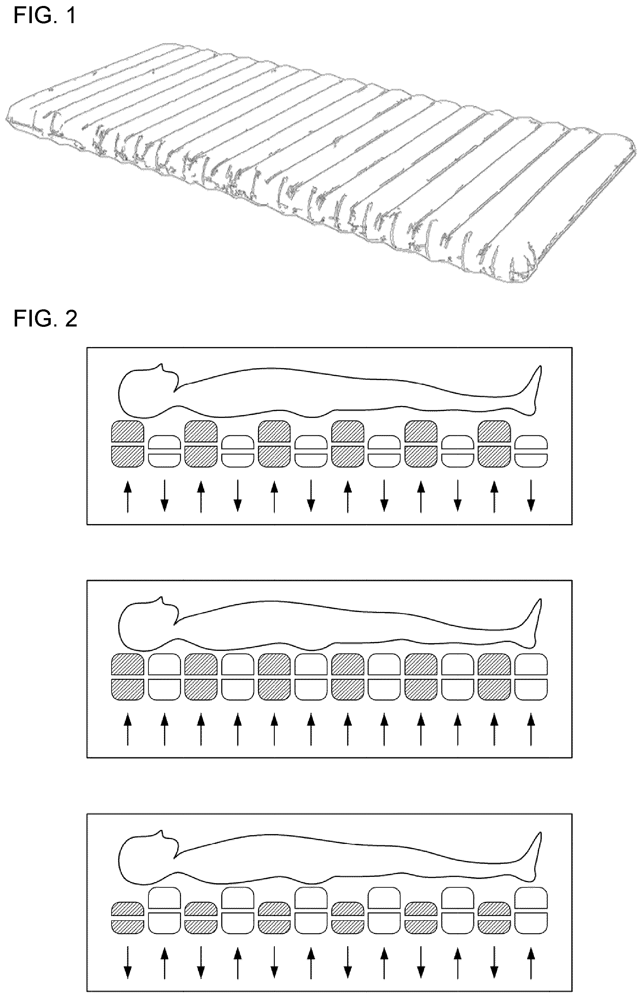

Air mattresses of prior art connect horizontally elongated air cells vertically as shown in FIG. 1 and alternate the inflation of odd-numbered and even-numbered air cells every 3 to 5 minutes to prevent bedsores, as depicted in FIG. 2. In such cases, there is a risk of grounding when air escapes from air cells corresponding to bony prominences such as the greater trochanter or shoulder, leading to psychological and physical discomfort such as motion sickness, compromising both the effectiveness and user experience.

In addition, some high-end products feature a function to warn of risks when the air pressure inside the air cells drops, but this function operates solely based on the internal air pressure falling below a threshold, without considering the user's physical characteristics, thereby failing to sufficiently achieve the practical effect of preventing bedsores. Moreover, as shown in FIG. 1, when horizontally elongated air cells of the prior art are used, issues such as grounding can occur when a patient turns sideways and the air in the center of the air cell spreads to both sides, or the air cell itself may sustain damage.

Accordingly, there is a need for a new bedsore prevention system capable of accurately identifying pressure points according to the user's body contours, meticulously controlling mattress pressure to alleviate pressure, and alleviating the burdens faced by caregivers.

### SUMMARY

The present invention has been proposed to solve the aforementioned issues and aims to provide an air pressure control device for a bedsore prevention mattress.

Technical problems to be solved by the present disclosure are not limited to the aforementioned object, and may include various technical objectives that would be apparent to those skilled in the art from contents to be described hereinafter.

An air pressure control mattress device comprises a mattress unit, a control unit, a pump unit, and a user input unit. The mattress unit comprises a plurality of air cells supplied with air from the pump unit. The control unit comprises a processor, a memory storing at least one instruction for air pressure control, at least one pressure sensor measuring air pressure within the air cells, and at least one air pressure control unit controlling air intake and exhaust of the air cells based on the instructions executed by the processor.

The air pressure control unit may comprise at least one valve for injecting air into or discharging air from the air cells. The at least one valve may comprise an inlet valve connecting the air cells and the pump unit and an outlet valve for discharging air from the air cells, or a single valve may perform both the function of injecting air into the air cells and discharging air from them.

The instructions may be executed by the processor such that when the control unit receives a first input from the user input unit, air is injected into the air cells through the at least one valve, the air pressure in each air cell is continuously received from the pressure sensor, and stop the air injection into the air cells via the at least on valve for air cells where the received air pressure reaches the first set value.

Accordingly, in one embodiment, the instructions may be executed by the processor such that when the control unit receives a first input from the user input unit, the inlet valve is opened, the outlet valve is closed, the air pressure in each air cell is continuously received from the pressure sensor, and the inlet valve connected to the air cell whose received air pressure corresponds to the first set value is closed.

The instructions may be executed by the processor such that, after the control unit receives the first input from the user input unit and stops air injection into the air cells via the at least one valve, may be further executed by the processor to continuously receive the air pressure in each air cell is continuously received from the pressure sensor, and after detecting a change in air pressure greater than a second set value, receive the air pressure in each air cell every n seconds. If the air pressure change in each air cell within n seconds is less than or equal to the third set value, the air pressure in each air cell received from the pressure sensor at that time may be stored in the memory as body pressure data.

Accordingly, in one embodiment, the instructions may be executed by the processor such that after the control unit receives the first input from the user input unit and closes the inlet valve, the instructions may be further executed by the processor to continuously receive the air pressure in each air cell from the pressure sensor, and when the received air pressure changes by at least the second set value, receive the air pressure in each air cell every n seconds. If the air pressure change in each air cell within n seconds is less than or equal to the third set value, the air pressure in each air cell received from the pressure sensor at that time may be stored in the memory as body pressure data.

The instructions may also be executed by the processor such that when the air pressure in each air cell is continuously received from the pressure sensor, to open all the valves or the inlet valve comprised in the air pressure control unit.

Additionally, the instruction may be executed by the processor to, upon the control unit receiving the second input from the user input unit, send a pump operation signal to the pump unit, control the input valve and output valve until the difference between the air pressure within each air cell received from the pressure sensor and the body pressure data is equal to or less than the third set value, and maintain the valve corresponding to the air cells where the difference between the air pressure within each air cell received from the pressure sensor and the body pressure data is equal to or less than the third set value, or the input valve and the output valve, in a closed state.

The instructions may also be executed by the processor such that when the control unit receives a third input from the user input unit, to inject air into the air cells through at least one valve until the difference between the air pressure in each air cell received from the pressure sensor and the body pressure data is less than or equal to the third set value. Afterward, the at least one valve may be controlled according to pre-stored rules in the memory.

The instructions may be also executed by the processor such that when the control unit receives a fourth input from the user input unit, at least one valve, specifically some portion of the outlet valves, are kept open.

When the control unit receives a fifth input from the user input unit, the instructions may be executed by the processor to alternately perform a first function of injecting air into each of the air cells connected to all valves in the first group of the at least one valve and a second function of discharging air from each of the air cells connected to all valves in the first group.

In one embodiment, the instructions may be executed by the processor such that when the control unit receives the fifth input from the user input unit, to alternately perform the first function of opening all inlet valves and closing all outlet valves within the first group, which are part of the inlet and outlet valves, and the second function of closing all inlet valves and opening all outlet valves within the first group.

The first group may be determined based on the input received from the user input unit.

The plurality of air cells may be arranged in a matrix format, and the first group may correspond to inlet and outlet valves of air cells arranged in odd-numbered rows or columns.

The instructions may be executed by the processor such that when the control unit receives a sixth input from the user input unit, to inject air through the valves corresponding to the air cells located beneath at least one of the user's head, chest, hips, or heels. Here, the instructions may be executed such that air is injected either simultaneously or sequentially by the processor.

The instructions may be executed by the processor such that, upon the control unit receiving the sixth input from the user input unit, to open all inlet valves and close all outlet valves corresponding to the air cells located under at least one of the user's head, chest, buttocks, or heels and sends a pump activation signal to the pump unit.

Alternatively, the instructions may be executed by the processor such that, upon the control unit receiving the sixth input from the user input unit, to discharge air through the valves corresponding to the air cells located under at least one of the user's head, chest, buttocks, or heels. Here, the instructions may be executed such that air is discharged either simultaneously through all valves corresponding to the air cells located under the user's head, chest, buttocks, or heels, or sequentially.

The air pressure control unit may further comprise at least one optical sensor to verify the status of the valves.

Among the plurality of air cells, those located under at least one of the user's head, chest, buttocks, or heels may comprise a filler inside.

The control unit may further comprise at least one angle sensor to measure the angle between at least one of the air cells and the ground surface.

The pump unit preferably comprises a pump that injects air into the air cells according to the instructions executed by the processor.

According to one embodiment of the present invention, the air pressure control device considers the user's physical characteristics and posture, enhancing the effectiveness of bedsore prevention by accounting for not only vertical pressure but also environmental factors such as temperature, humidity, shear force, and friction.

Additionally, the present invention enables individual control of each air cell and its alternating flotation, while measuring and analyzing the air pressure or contact pressure of each air cell enables the analysis of the user's posture and selective removal of pressure in certain air cells.

Therefore, by removing pressure from or supporting pressure in areas where patients may feel discomfort, such as the lumbar region, the device can help create customized postures for individual patients, aiding in the treatment of bedsores or other conditions.

Moreover, the device can automatically monitor bedridden patients by detecting pressure changes due to breathing or posture shifts, identifying emergencies such as seizures. It can adjust air pressure appropriately and support caregivers or medical staff in situations requiring patient movement or cardiopulmonary resuscitation.

Furthermore, according to one embodiment of the present invention, the system can record operational times, changes in body pressure data, and warning data alongside features like high-risk pressure alerts, internal low-pressure alerts, and posture-change warnings. These records can be provided as training data for artificial intelligence or supplied to institutions, contributing to the improvement of healthcare quality.

### BRIEF DESCRIPTION OF THE DRAWINGS

FIGS. 1 and 2 illustrate the structure of a mattress and the air pressure control method according to conventional technology.
FIG. 3 is a cross-sectional view showing a portion of the mattress unit and control unit according to an embodiment of the present invention.
FIG. 4 is a perspective view of the mattress unit and air pressure control unit according to an embodiment of the present invention.
FIG. 5 is an internal structural diagram of an air cell and a node board according to an embodiment of the present invention.
FIG. 6 illustrates the internal structure of the air pressure control unit connected to a single air cell according to an embodiment of the present invention.
FIG. 7 shows the signal flow associated with the control unit according to an embodiment of the present invention.
FIG. 8 illustrates a method for controlling the air pressure within each air cell of the mattress unit based on user input, according to an embodiment of the present invention.
FIG. 9 provides various examples of the mattress unit and user input unit according to an embodiment of the present invention.
FIG. 10 shows an example of utilizing the air pressure control mattress device according to an embodiment of the present invention.

### DETAILED DESCRIPTION

The advantages and features of the present invention, and the methods for achieving them, will become clear with reference to the embodiments described in detail below in conjunction with the accompanying drawings. However, the present invention is not limited to the embodiments disclosed below and may be implemented in various other forms. These embodiments are merely provided to ensure a complete disclosure of the invention and to fully convey the scope of the invention to those skilled in the art, and the invention is only defined by the scope of the claims.

The shapes, sizes, ratios, angles, and numbers disclosed in the drawings for explaining the embodiments of the invention are illustrative and not restrictive. Throughout the specification, the same reference numerals refer to the same elements. Furthermore, in explaining the invention, detailed descriptions of known technologies are omitted if they are deemed to unnecessarily obscure the essence of the invention. The terms "comprises," "comprises," and "is made up of" used in this specification may comprise other elements unless explicitly limited by "only." Unless explicitly stated otherwise, singular expressions of elements may comprise plural instances of the elements.

In interpreting elements, unless otherwise explicitly stated, it is assumed to comprise error ranges.

When describing positional relationships, for example, "~on," "~above," "~below," "~next to," etc., unless explicitly stated as "immediately" or "directly," one or more other elements may be located between the two parts.

Although terms such as first and second are used to describe various elements, these terms are not limited by these terms and are only used to distinguish one element from another. Therefore, the first element described below may also be the second element within the technical scope of the invention.

In this disclosure, expressions such as "A or B," "at least one of A or/and B," or "one or more of A or/and B" may comprise all possible combinations of the listed items. For example, "A or B," "at least one of A and B," or "at least one of A or B" can mean: (1) comprising at least one A, (2) comprising at least one B, or (3) comprising at least one of both A and B.

Throughout the specification, the same reference numerals refer to the same or similar components.

The size and thickness of each component shown in the drawings are depicted for the convenience of explanation and are not necessarily limited to the depicted dimensions and thickness.

The respective features of the various embodiments of the present invention can be partially or entirely combined or integrated, allowing for various interconnections and operations, as understood by those skilled in the art. Each embodiment may be implemented independently of the others or together in a relational manner.

Hereinafter, embodiments of the present invention will be described in detail with reference to the accompanying drawings. Multiple embodiments described below may be applied redundantly unless they are mutually contradictory.

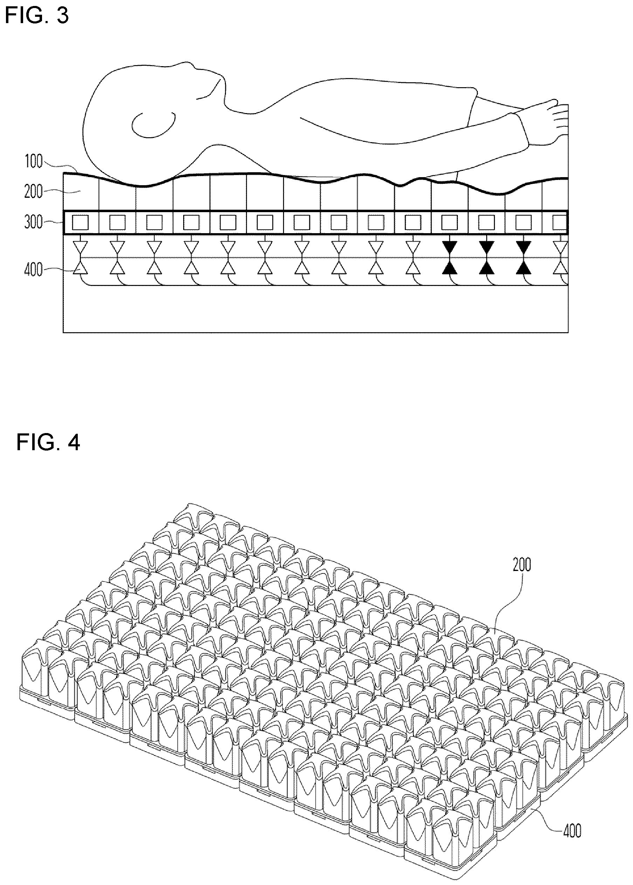

FIG. 3 is a cross-sectional view showing a part of a mattress unit and a control unit according to an embodiment of the present invention.

Referring to FIG. 3, an air pressure control mattress according to an embodiment of the present invention may comprise a cover 100, at least one air cell 200, a pressure sensor 300, and an air pressure control unit 400.

The cover 100 is preferably made of a waterproof and elastic material since it is directly in contact with the user's body. For example, the cover 100 or at least a portion of the cover 100 may be made of coated spandex. The cover 100 is also preferably made of a material capable of controlling temperature and humidity to prevent bedsores. For instance, a part of the cover 100 may be made of mesh material. The cover 100 may not be comprised in other embodiments and may be detachable, allowing the user to decide whether to comprise the cover 100.

The air cell 200, as shown in FIG. 3, is preferably deformable according to the curvature of the user's body. Detailed descriptions of the air cell 200 will be provided later.

The pressure sensor 300 is preferably comprised inside the air cell 200 to measure the internal air pressure of the air cell 200. The pressure sensor 300 may also be connected to the air pressure control unit 400 and may be comprised inside the air pressure control unit 400 to measure the pressure of a portion of the air pressure control unit 400.

The air pressure control unit 400 may consist of multiple hoses and motors, and these multiple hoses may be interconnected. In one embodiment, two or more hoses within the air pressure control unit 400 may be connected through a main hose. These two or more hoses or the main hose can serve as air passages connecting the air cells with the pump or external exhaust outlets.

FIG. 4 is a perspective view of a mattress unit and an air pressure control unit according to an embodiment of the present invention.

Referring to FIG. 4, a bedsore prevention mattress comprising an air pressure control device according to an embodiment of the present invention may comprise multiple air cells arranged in a matrix form.

The air cell is filled with a fluid, a filler, or a combination of both, and its outer surface can be made of a material with high ignition resistance and a high melting point. Additionally, the material should be strong against external impacts, such as tearing or damage. It is preferable that the outer surface of the air cell or the air cell itself is made of a durable and elastic material, such as thermoplastic polyurethane (TPU), thermoplastic elastomer (TPE), polyvinyl chloride (PVC), or rubber, or at least one of these materials.

Moreover, at least some of the air cells may contain filler inside. The amount of filler inside at least some of the air cells may vary. The filler of the air cell 200 is preferably an elastic material, such as polyurethane foam, memory foam, rubber, sponge, or multiple microbeads. When using polyurethane foam or memory foam as the filler, the amount of filler in at least some of the air cells may be the same, but the density or shape of the filler may vary. The air cell 200 is filled with fluid, filler, or a combination of both, and the outer surface may be made of a material that has high ignition resistance and a high melting point.

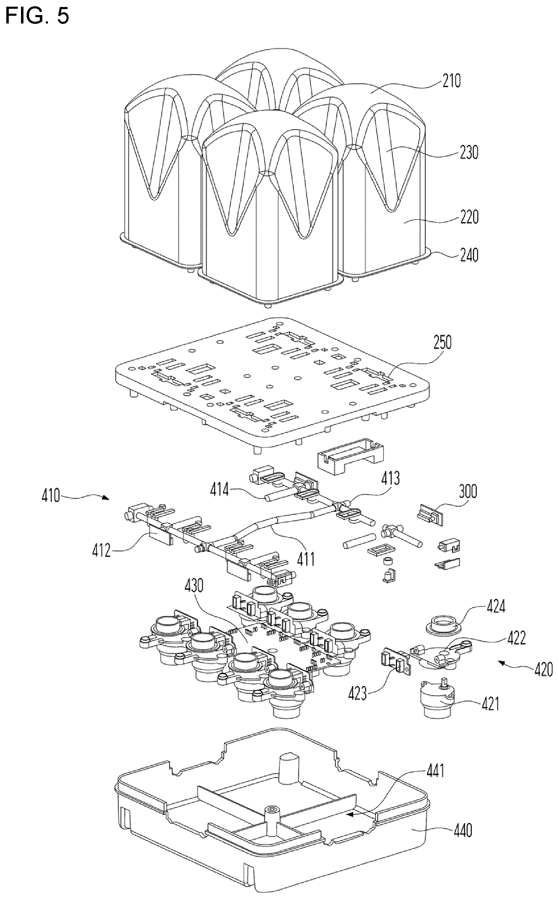

A node board 400, comprising the air pressure control unit, may be located inside or at the bottom of the air cell. In one embodiment, each node board can control four adjacent air cells (2x2 arrangement) as shown in FIG. 4. Alternatively, in another embodiment, a node board may control one air cell or a plurality of adjacent air cells. In this case, the node board can control each air cell individually or control the connected air cells simultaneously. That is, the input or outlet valve connected to one air cell can control the air pressure in that air cell, or an input or outlet valve connected to all four air cells can control the air pressure in all four air cells at once. The detailed structure of the air cell and the node board will be further explained in FIG. 5.

FIG. 5 illustrates the internal structure of the air cell and node board according to one embodiment of the present invention.

Referring to FIG. 5, the air cell 200 may comprise an air cell top portion 210 and an air cell column portion 220 and may further comprise a joint portion 230 connecting the top portion 210 and the column portion 220. The air cell top portion 210 is preferably convex upward toward the user's body but may be flat. The air cell column portion 220 may be rectangular, cylindrical, or spherical in shape, and the disclosure does not limit the shape of the column portion. The described shapes of the air cell top portion 210 and column portion 220 may be observed when the air pressure inside the air cell exceeds a certain level (e.g., 1 atm), but different shapes may appear when the air pressure is lower than the external pressure.

The joint portion 230 of the air cell is preferably designed to minimize negative impacts on the durability of the air cell or user discomfort when the air pressure inside the air cell is lower than the external pressure, causing the volume of the air cell to decrease.

The air cell 200 may further comprise an air cell bottom portion 240 and an air cell frame 250 to prevent unintended air inflow or outflow, ensuring that internal air pressure control occurs only via the air pressure control unit or at the user's discretion. The air cell bottom portion 240 is preferably made of the same material as at least a part of the air cell top portion 210, the air cell column portion 220, or the joint portion 230, while the air cell frame 250 is preferably made of a material such as plastic or metal that is resistant to changes caused by external pressure. The shape of the air cell bottom portion 240 is preferably parallel to a part of the corresponding air cell frame 250.

The air pressure control unit 400 according to one embodiment of the present invention may comprise at least one of a hose unit 410, a motor unit 420, a circuit unit 430, and a cover frame 440. The hose unit 410 may comprise a first hose 411, a second hose 412, and a third hose 413. The first hose 411 may be arranged to traverse the center of the air cell frame 250 or the cover frame 440. The second hose 412 may be connected to one side of the first hose 411 and may be arranged perpendicular to the first hose 411. The third hose 413 may be connected to the other side of the first hose 411 and may also be arranged perpendicular to the first hose 411. Additionally, the third hose 413 may comprise a fourth hose 414 branching off from one side of the third hose 413. In one embodiment, the first to fourth hoses 411, 412, 413, 414 may be positioned under one air cell or operate as a single module under multiple air cells.

When the first to fourth hoses 411, 412, 413, 414 are positioned under multiple air cells as a single module, they may serve to move air between the air cells by being interconnected. For instance, if air needs to be discharged from a first air cell and supplied to a second air cell connected to the same node board as the first air cell, air from the first air cell may be transferred to the second air cell through the second hose 412.

The pressure sensor 300 may be located inside the air cell 200, within the hose unit 410, or some of the plurality of pressure sensors 300 may be positioned inside the air cell 200 while others are located in the hose unit 410.

At least some of the first to fourth hoses 411, 412, 413, and 414 may be opened or closed by the operation of the motor unit 420. The motor unit 420 may comprise at least one of a motor 421, a holder unit 422, an optical sensor 423, and a wheel lever 424. The motor 421 may be a three-way motor valve capable of controlling valve flow, with a cylindrical shape, and may open or close one side of the valve through rotation. The holder unit 422 may serve to fix the motor 421 in a specific position or state.

The optical sensor 423 may be located at the top of the motor 421 and may comprise a phototransistor. An LED may be positioned opposite the optical sensor 423. When a physical object such as a wheel with a slot is located between the phototransistor and the LED, a pulse train is generated. The motor unit 420 or control unit can count this pulse train via the optical sensor 423 to determine the current state (e.g., rotations per minute, RPM) of the motor 421. Thus, the motor's status (e.g., rotation speed) can be controlled. The wheel lever 424 can rotate the motor 421 by being positioned at the upper side of the motor 421 under the command of the motor unit 420 or the control unit.

The pressure sensor 300 may be coupled to the air cell frame 250 or located on the top of the air cell frame 250 to measure body pressure in different areas. The body pressure measured by the pressure sensor 300 may be transmitted to the control unit, which, based on the received body pressure and the motor state confirmed through the optical sensor 423, can determine whether to open or close the respective hoses 411, 412, 413, and 414 and send control signals to the motor unit 420. The motor unit 420, upon receiving the control signals, preferably operates the wheel lever 424.

The circuit unit 430 may be a printed circuit board (PCB) assembly or a control module of an electronic control device formed by combining multiple components. The circuit unit 430 may comprise a processor and memory, or it may serve as a signal transmission medium based on an external processor or memory located outside the air pressure control unit 400. The circuit unit 430 may be electrically connected to the motor unit 420.

The cover frame 440 is preferably coupled to the air cell frame 250; however, it is preferable that at least a part of the hose unit 410 passes through the assembly of the cover frame 440 and the air cell frame 250 without being sealed. The cover frame 440 may comprise a support 441 inside for supporting or partitioning the internal space.

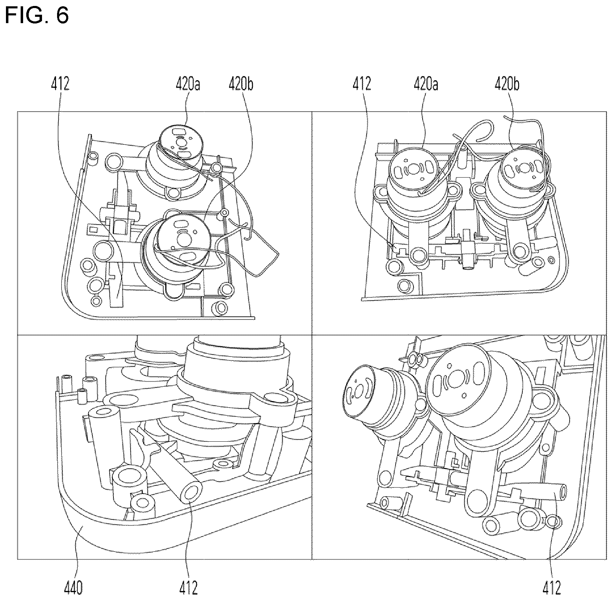

FIG. 6 illustrates the internal structure of an air pressure control unit corresponding to a single air cell in an embodiment of the present invention.

Referring to FIG. 6, the motor units 420a and 420b may be arranged along the longitudinal direction of the second hose 412, with at least two or more units placed. The hose unit 410 is inserted between the fitting members extending from the motor units 420a and 420b, allowing a protrusion from the bottom of the motor unit 420 to press the outer surface of the hose unit 410, thereby closing the hose. The protrusion may move by the operation of the wheel lever 424, at which time the hose may be opened. In other words, each hose 411, 412, 413, and 414 constituting the hose unit 410 can be opened or closed by the rotation of the motor 421 based on signals from the control unit.

Additionally, when assembling the cover frame 440 composed of multiple pieces, hoses other than the second hose (e.g., hoses 411, 413, 414) can be connected to the second hose 412. This configuration enables the transfer of air between air cells, as described above.

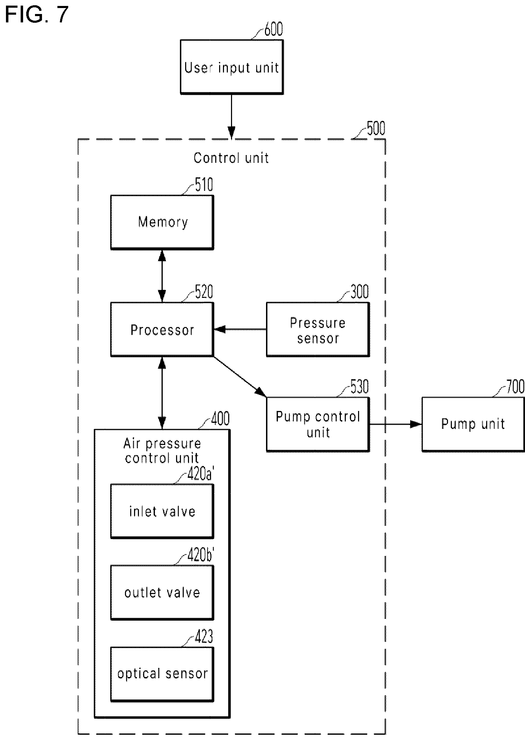

FIG. 7 shows a signal flow related to the control unit in an embodiment of the present invention.

Referring to FIG. 7, the control unit 500 may comprise, in addition to the air pressure control unit 400, a memory 510, a processor 520, and a pump control unit 530. It may also comprise some or all of the pressure sensors 300. The pressure sensor 300 may be located outside the control unit. In this case, the processor 520 may control at least one of the memory 510, the air pressure control unit 400, and the pump control unit 530 based on the values measured by the pressure sensor 300.

The memory 510 temporarily or permanently stores various programs or data and provides the stored information to the processor 520 when called upon. Additionally, the memory 510 may electronically store various types of information (e.g., instructions) necessary for operations such as calculations, processing, or control performed by the processor 520.

The memory 510 may comprise at least one of primary and secondary storage devices. The primary storage device may be implemented using semiconductor storage media such as ROM (Read-Only Memory) and/or RAM (Random-Access Memory). The secondary storage device may use storage media capable of permanent or semi-permanent data storage, such as flash memory devices, SD (Secure Digital) cards, SSDs (Solid State Drives), HDDs (Hard Disc Drives), optical media, or floppy disks.

The processor 520, by executing at least one instruction stored in the memory as described above, may comprehensively control operations related to air pressure control within each air cell. The processor 520 may be implemented as a single processor or as multiple processors. In one embodiment, the processor 520 may partially or fully perform the functions of the pump control unit 530 to deliver signals for operating the air pump within the pump unit. Therefore, in one embodiment, the control unit 500 may control the pump unit 700 without comprising a separate pump control unit 530.

The pressure sensor 300 may comprise both an air pressure sensor and a flexible pressure sensor. In this case, the control unit 500 or the processor 520 can combine or merge measurements from the air pressure sensor and the flexible pressure sensor. By analyzing the pressure values from these sensors in two or three dimensions, the user's lying posture can be determined, enabling the generation of a human body pressure map (or human body posture map) based on the user's posture. This process ultimately identifies pressure ulcer risk areas. Rather than merely identifying high-pressure areas through direct pressure sensing, this approach utilizes AI or similar methods stored in the memory 510 to analyze the user's lying posture. The system then estimates which body regions are under pressure. This method achieves an accuracy exceeding 90% in identifying pressure ulcer risk areas.

The air pressure control unit 400 may be structured as a hose unit 410 and a motor unit 420, or functionally as an inlet valve 420a' and an outlet valve 420b'. Each of the inlet and outlet valves preferably comprises at least one of a motor and a hose. While separate motors (input motor and output motor) may operate the inlet and outlet valves, a single motor may also control both. Similarly, the inlet valve and the outlet valve can each comprise separate hoses, namely, an input hose and an output hose, but a single hose can handle both air intake and discharge. That is, the inlet valve 420a' and the outlet valve 420b' can each comprise separate motor units 420a and 420b, or a single motor can operate valves performing both functions. Additionally, the inlet valve 420a' and the outlet valve 420b' can each comprise separate hoses or share a single hose.

The user input unit 600 can receive inputs ranging from the first to the sixth type, as well as additional related information. It may include devices such as a microphone, mouse, keyboard, digital pen (e.g., stylus pen), or touch panel. The touch panel could utilize various technologies, including capacitive, resistive, infrared, or surface ultrasonic sensing methods.

The user input unit 600 may further comprise an output device to display the status or other information of the air pressure control device according to an embodiment of the present invention to the user. The output devices comprised in the user input unit 600 may comprise lighting, speakers, text display devices, and display panels. Specifically, the display panel may comprise various types such as LCD (Liquid Crystal Display) panels, OLED (Organic Light Emitting Diodes) panels, AM-OLED (Active-Matrix Organic Light-Emitting Diode) panels, LCoS (Liquid Crystal on Silicon), QLED (Quantum dot Light-Emitting Diode) panels, DLP (Digital Light Processing) panels, PDP (Plasma Display Panel) panels, inorganic LED panels, and micro LED panels, but is not limited to these. Additionally, the display panel may be configured as a touch screen in combination with the aforementioned touch panel or may be made as a flexible panel.

The user input unit 600 may consist of a single input unit or a plurality of input units, in which case the plurality of input units may perform different roles or may partially perform identical roles.

The pump unit 700, receiving signals from the control unit 500 or the pump control unit 530, operates the air pump to increase air pressure within the air cell. If equipped with an air outlet, the pump unit 700 can also reduce air pressure.

The communication between the aforementioned components may be based on electrical signals such as RS-485 and, in one embodiment, may comprise wireless communication. For example, when the user input unit 600 and the control unit 500 are not physically connected, communication between the user input unit 600 and the control unit 500 may be performed via Bluetooth, Bluetooth Low Energy (BLE), CAN communication, Wi-Fi, Wi-Fi Direct, Ultra-Wideband (UWB), Zigbee, Infrared Data Association (IrDA), Near Field Communication (NFC), Wi-Max, LTE (Long Term Evolution), 5G, 6G, and subsequent communication standard technologies.

Here, the control unit 500 and its components may further comprise communication units, and these components, comprising the communication units, may not be physically connected to each other. For instance, the memory 510, the processor 520, and the pump control unit 530 may be comprised in a separate carrier board, while the pressure sensor 300 and the air pressure control unit 400 may be comprised in a node board. In such cases, both the carrier board and the node board may comprise communication units to allow the processor 520 to control each component.

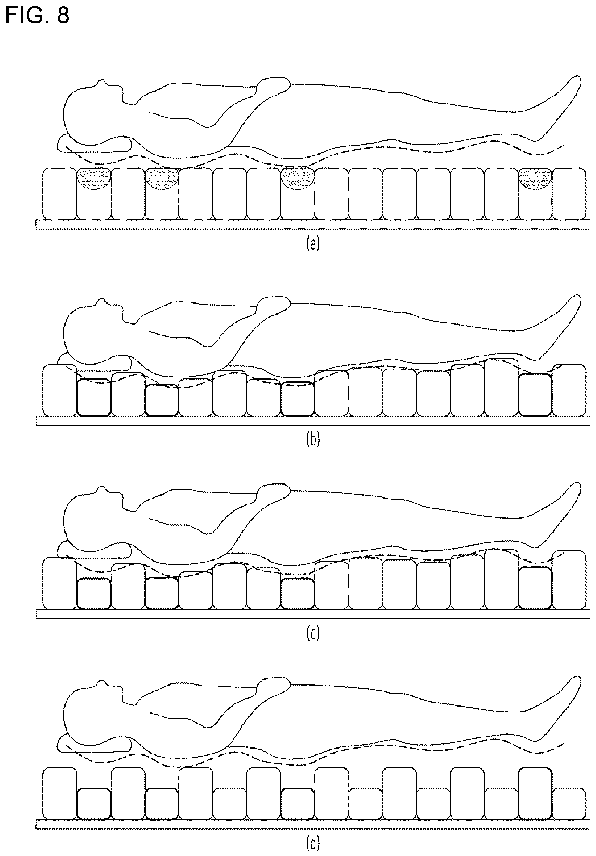

FIG. 8 illustrates a diagram explaining how to control the air pressure in each air cell of the mattress unit according to user input in one embodiment of the present invention.

FIG. 8(a) depicts the side view of the mattress unit when the user input unit 600 receives the first or second input. The first input may correspond to activating the power button without additional input from the user or a signal related to starting use, entered by the user via a touchpad or buttons.

Upon receiving the first input, the air pressure control mattress device can fill all air cells with air before the user or patient lies on the mattress unit. This ensures that the air is sufficiently filled, reducing friction when positioning the user or patient on the mattress unit. To achieve this, the control unit 500 may open the inlet valves while keeping the outlet valves closed, continuously receiving the air pressure in each air cell from the pressure sensor and closing the inlet valve connected to the air cell where the received air pressure corresponds to the first set value. Alternatively, the control unit 500 may inject air into the air cells through at least one valve and stop air injection via the same valve once the received air pressure in the air cell reaches the first set value.

When the user or patient lies on the mattress, the pressure deviation in each air cell changes to match the user's or patient's body. Thus, the control unit 500 continuously receives air pressure in each air cell from the pressure sensor and may determine that the user or patient is lying on the mattress when the received air pressure changes exceed the second set value or when the deviation between air pressures exceeds the second set value. Subsequently, the control unit 500 may receive the air pressure in each air cell at intervals of n seconds, e.g., every 5 seconds or preferably every 1 second. If the pressure change within n seconds is less than the third set value, the air pressure in each air cell received at that point may be stored in memory 510 as body pressure data, which can also be referred to as a human body pressure map corresponding to the user's or patient's lying posture. The third set value may be defined as an absolute value, e.g., 1 to 100 Pa, or as a relative value, e.g., 1 to 5%.

The second input may be a signal sent by the user via the user input unit to move the user or patient lying on the mattress unit. Upon receiving the second input, the air pressure control mattress device can rapidly inject air into the air cells to minimize friction when moving the user or patient lying on the mattress unit. To achieve this, the control unit 500 may send a pump activation signal to the pump unit 700 and control the valves, such as opening and closing the inlet and outlet valves, until the difference between the air pressure in each air cell received from the pressure sensor and the body pressure data becomes equal to or less than the third set value or the fourth set value. The control unit 500 can also maintain the valves (comprising the inlet and outlet valves) corresponding to the air cells, where the difference between the air pressure and the body pressure data is equal to or less than the third set value or the fourth set value, in a closed state. In other words, air may be injected into each air cell until it reaches a state similar to the body pressure data or the human body pressure map obtained after placing the user or patient on the mattress unit following the first input. Subsequently, the control unit 500 can save the air pressure of each air cell in this state again. These values may replace the existing body pressure data.

Upon receiving the third input, the control unit 500 may automatically adjust the air pressure or air volume in each air cell to redistribute pressure along the user's or patient's body contour to reduce pressure on high-pressure areas and prevent pressure sores. In this context, "automatically" refers to pre-stored algorithms in the memory 510. The pre-stored algorithms may be based on artificial intelligence. Therefore, the algorithms or pre-stored rules can be continuously modified based on input received from the pressure sensor 300 or the user input unit 600.

The fourth input is recommended for patients with pressure sores or at high risk of developing pressure sores. It serves to reduce the pressure in some air cells (by opening the outlet valves or maintaining the air pressure below 1 atm). Upon receiving the fourth input, the control unit 500 can keep some valves, particularly some of the outlet valves, open. These valves can be determined by pre-stored algorithms in memory 510, by data directly input by medical personnel or users via the user input unit 600, or by a combination of both.

Upon receiving the fifth input, the air pressure control mattress device may perform the alternating support function of prior technologies, where air cells in odd and even rows are alternately inflated. In addition, the groups of air cells to be alternately supported can be determined by pre-stored algorithms in memory 510, by data directly input by medical personnel or users via the user input unit 600, or by a combination of both. Furthermore, as with the fourth input, some air cells may have their pressure removed, and only the remaining air cells can alternate their support. The groups of air cells alternately supported in the fifth input are not limited to two groups as in prior technologies. Instead, a single group of air cells can repeatedly inflate and deflate, or three or more groups of air cells can alternate their support.

The sixth input may be used to support emergency situations requiring cardiopulmonary resuscitation (CPR). During CPR, the patient's chest must remain stabilized. Upon receiving the sixth input, the control unit 500 can fully inflate the air cells located under the user's chest by opening all the corresponding inlet valves and closing all the outlet valves. The control unit 500 can then send a pump activation signal to the pump unit to ensure that the air cells under the patient's chest are completely filled with air or that the air pressure in these air cells exceeds a fifth set value. At this time, the duration required to reach the fifth set value in the air cells under the patient's chest must be very short, and there is a risk of damage to the air cells.

Thus, upon receiving the sixth input, the control unit 500 can open all the outlet valves corresponding to the air cells located under the user's chest, discharging the air within these air cells. At this time, there is a risk of grounding on the user's back. To prevent this, some air cells may contain filler such as polyurethane foam. Filler may exist not only in the air cells under the user's chest but in all air cells 200.

Additionally, upon receiving the sixth input, the control unit 500 can inject or discharge air through the valves corresponding to the air cells located under bony protrusions such as the user's head, chest, buttocks, and heels. At this time, to prevent grounding of each part, the air cells under the bony protrusions can comprise filler internally.

Additionally, the control unit 500, upon receiving the sixth input, may simultaneously inject or discharge air into all air cells that require pneumatic control and may sequentially inject or discharge air into each air cell according to a pre-stored order in memory 510.

The inputs received via the user input unit 600 comprise not only the first to sixth inputs but also various other inputs depending on the circuit configuration of the control unit 500 or the composition of instructions stored in memory 510.

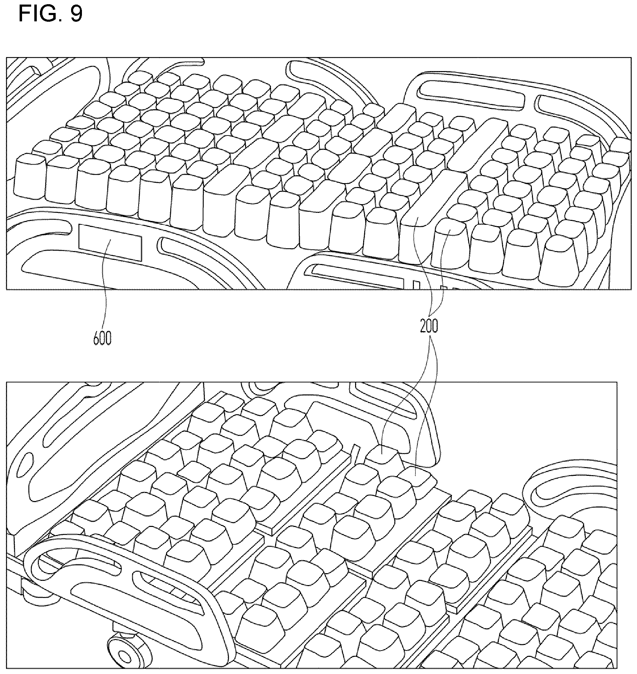

FIG. 9 illustrates various examples of a mattress unit and a user input unit according to an embodiment of the present invention.

Referring to FIG. 9, air cells 200 within a single mattress unit may have different shapes and heights. In one embodiment, one air cell 200 may be disposed in each unit section arranged in a matrix form, or a single air cell 200 may correspond to multiple adjacent unit sections. For example, when the dimension of an air cell corresponding to one unit section is 10 cm × 11 cm × 16 cm (wherein the width, length, and height measurements may have a margin of error within 20%), air cells having dimensions of 20 cm × 11 cm × 16 cm and 40 cm × 11 cm × 16 cm may be arranged together on the mattress unit. The size of air cells 200 is not limited to the aforementioned examples; in addition to width, air cells with varying lengths or heights can be arranged within a single mattress unit.

Referring to the lower part of FIG. 9, the height of air cells 200 may vary. At this time, while the sizes of the air cells 200 may be identical, their placement heights may differ. That is, the height at which the air cell frame 250 is positioned may differ or vary among the air cells 200.

Additionally, the mattress unit may be disposed on a frame that comprises the air pressure control unit 400 or the control unit 500. In this case, the exterior of the frame may comprise the user input unit 600. The frame may also comprise wheels and brakes to support the movement of the user or patient.

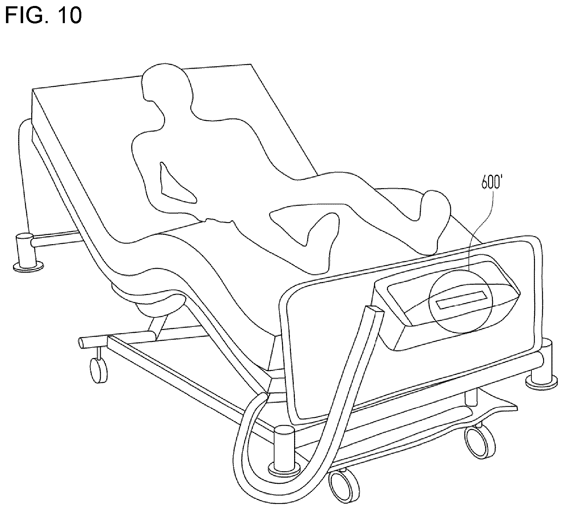

FIG. 10 illustrates an example of utilizing the air pressure control mattress device in a medical institution, such as a hospital, according to an embodiment of the present invention.

Referring to FIG. 10, the air pressure control mattress device according to an embodiment of the present invention may further comprise an angle adjustment function. In one embodiment, the mattress unit may comprise at least one joint that can fold or unfold based on inputs from the user input unit 600'. Upon receiving a seventh input for angle adjustment, each joint can be manipulated. At this time, at least one air cell 200 may comprise an angle sensor. For cost efficiency, the angle sensor is preferably comprised in only a part of the air cell 200 rather than the entire air cell.

A second input or a separate input (eighth input) may further perform a function for moving the user or patient. For example, air pressure or the height of the air cells (height of the air cell frame) can be adjusted to create an incline in the mattress unit. Similarly, as with the seventh input, the joints within the mattress unit can be manipulated to create an incline, facilitating the movement of the user or patient.

Meanwhile, the air pressure control mattress device according to the embodiment of the present invention can apply a design for filler or air foams to distribute pressure based on the pressure sensor 300 or body pressure data. That is, the amount or density of filler inside the air cells 200 on the mattress unit can correspond to the body pressure data.

Additionally, the air pressure control mattress device according to the embodiment of the present invention can support remote monitoring and mattress control via an application. Accordingly, all air cells can be individually controlled using a pressure module system combined with freely flexible pressure sensor. For example, a mattress (900 mm × 2000 mm) can be equipped with 160 air cells (100 mm × 100 mm) with individually controllable air pressure. By continuously measuring the pressure corresponding to all 160 air cells, bedsores can be prevented through pressure relief rather than pressure distribution.

Furthermore, the air pressure control enables functionalities such as skin massage and inducing deep sleep. When used in large hospitals, the mattress can provide monitoring capabilities to prevent bedsores by presenting the posture cycles and pressure distributions of all patients.

According to one embodiment of the present invention, the number of valves and motors corresponding to air cells associated with specific areas prone to bedsores can be increased due to more frequent operation of valve structures in such areas. In other words, the number of valves and motors corresponding to each air cell may differ among air cells.

While the preferred embodiments of the present invention have been illustrated and described above, the present disclosure is not limited to the specific embodiments described. Various modifications can be made by those skilled in the art without departing from the scope of the claims. Such modifications should not be understood separately from the technical spirit or perspective of the present invention.

## Claims

1. An air pressure control mattress device comprising:
a mattress unit;
a control unit;
a pump unit; and
a user input unit;
wherein the mattress unit comprises a plurality of air cells supplied with air from the pump unit;
wherein the control unit comprises a processor, a memory storing at least one instruction for air pressure control, at least one pressure sensor measuring air pressure within the air cells, and at least one air pressure control unit controlling air intake and exhaust of the air cells based on the instructions executed by the processor.

2. The air pressure control mattress device of claim 1, wherein the air pressure control unit comprises at least one valve for injecting air into or discharging air from the air cells.

3. The air pressure control mattress device of Claim 2, wherein the instructions, when the control unit receives a first input from the user input unit, are further executed by the processor to are further executed by the processor to:are further executed by the processor to:
inject air into the air cells via the at least one valve, continuously receive the air pressure in each air cell from the pressure sensor, and
stop the air injection into the air cells via the at least one valve for air cells where the received air pressure reaches a first set value.

4. The air pressure control mattress device of claim 3, wherein the instructions, after the control unit receives the first input and stops air injection into the air cells via the at least one valve as executed by the processor, are further executed by the processor to are further executed by the processor to:
continuously receive the air pressure in each air cell from the pressure sensor,
after detecting a change in air pressure greater than a second set value, receive the air pressure in each air cell every n seconds, and
store the air pressure in each air cell received from the pressure sensor at that time in the memory as body pressure data when the amount of change in air pressure in each air cell within n seconds is less than or equal to a third set value.

5. The air pressure control mattress device of claim 4,
wherein the instructions, when continuously receiving air pressure in each air cell from the pressure sensor, are further executed by the processor to open all valves comprised in the air pressure control unit.

6. The air pressure control mattress device of claim 4,
wherein the instructions, when the control unit receives a second input from the user input unit, are further executed by the processor to are further executed by the processor to:
send a pump operation signal to the pump unit,
inject air into the air cells via the at least one valve until the difference between the air pressure in each air cell received from the pressure sensor and the body pressure data is less than or equal to a third set value, and maintain the valves, corresponding to the air cells where the difference between the air pressure received from the pressure sensor in each air cell and the body pressure data is less than or equal to the third set value, in a closed state.

7. The air pressure control mattress device of claim 4,
wherein the instructions, when the control unit receives a third input from the user input unit, are further executed by the processor to:
inject air into the air cells via the at least one valve until the difference between the air pressure in each air cell received from the pressure sensor in each air cell and the body pressure data is less than or equal to a third set value, and
control the at least one valve based on rules pre-stored in the memory.

8. The air pressure control mattress device of claim 4, wherein the instructions, when the control unit receives a fourth input from the user input unit, are further executed by the processor to maintain a portion of the at least one valve in an open state.

9. The air pressure control mattress device of claim 4, wherein the instructions, when the control unit receives a fifth input from the user input unit, are further executed by the processor to alternately perform:
a first function of injecting air into each of the air cells connected to all valves in a first group of the at least one valve, and
a second function of discharging air from each of the air cells connected to all valves in the first group.

10. The air pressure control mattress device of claim 9, wherein the first group is determined based on the input received from the user input unit.

11. The air pressure control mattress device of claim 2, wherein the instructions, when the control unit receives a sixth input from the user input unit, are executed by the processor to:
inject air via valves corresponding to the air cells located under at least one of a user's head, chest, buttocks, or heels, and
send a pump operation signal to the pump unit.

12. The air pressure control mattress device of claim 2, wherein the instructions, when the control unit receives a sixth input from the user input unit, are executed by the processor to discharge air via valves corresponding to the air cells located under at least one of a user's head, chest, buttocks, or heels.

13. The air pressure control mattress device of claim 2, wherein the air pressure control unit further comprises at least one optical sensor for checking the status of the valves.

14. The air pressure control mattress device of claim 1, wherein the air cells located under at least one of a user's head, chest, buttocks, or heels comprise a filler inside.

15. The air pressure control mattress device of claim 1, wherein the control unit further comprises at least one angle sensor for measuring an angle between at least one of the air cells and the ground surface.
